# EUROPEAN PATENT SPECIFICATION

(11) **EP 3 566 155 B1**
(45) Date of publication and mention of the grant of the patent: **30.04.2025**
(21) Application number: 18764932.2
(22) Date of filing: 31.01.2018
(51) Int. Cl.: G06Q 10/10, G06Q 10/107, G06Q 10/109, G06F 16/332

(54) **SHARED EXPERIENCES**
GEMEINSAME ERFAHRUNGEN
EXPÉRIENCES PARTAGÉES

(30) Priority: 06.03.2017 US 201762467449 P
(43) Date of publication of application: 13.11.2019
(73) Proprietor: Google LLC, Mountain View, CA 94043 (US)
(72) Inventor: BASHFORD, Ben, Mountain View, CA 94043 (US); BOJIC, Miroslav, Mountain View, CA 94043 (US); WEBB, Matt, Mountain View, CA 94043 (US)
(74) Representative: Chettle, John Edward
(86) International application number: PCT/US2018/016071
(87) International publication number: WO 2018/164781

(56) References cited:
- WO-A1-2016/046824
- WO-A1-2017/176558
- CN-A- 102 419 769
- US-A1- 2013 297 317
- US-A1- 2014 164 509
- US-A1- 2016 055 246
- US-A1- 2017 337 209

## Description

### CROSS-REFERENCE TO RELATED APPLICATION

This application claims priority to U.S. Provisional Patent Application No. 62/467,449, filed March 6, 2017.

### BACKGROUND

Many modern computing devices, including mobile phones, personal computers, and tablets, provide graphical user interfaces (GUIs) for permitting users to interact with the computing device. For example, application programs can use the GUI to communicate with a user using images, text, and graphical elements such as windows, dialogs, pop-ups, images, buttons, scrollbars, and icons. The GUI can also receive inputs from user-interface devices such as touch screens, computer mice, keyboards, and other user-interface devices to permit the user to control the GUI, and thus the application program.

In some cases, the GUI can be used to interact with an operating system (OS) to manage the computing device. For example, the OS can have a control panel or setting application that uses the GUI to draw one or more windows related to control settings for some aspect(s) of the computing device, such as audio controls, video outputs, computer memory, and human language(s) used by the OS (*e.g.,* choose to receive information in English, French, Mandarin, Hindi, Russian, etc.). The control panel / settings application can receive subsequent input related to the window(s) using the GUI. The GUI can provide the inputs to the OS, via the control panel / settings application, to manage the computing device.
US 2014/164509 A1 discloses a processor programmed to use a record of a multiparty conversation to provide input to a virtual agent. US 2013/297317 A1 discloses a method that includes listening to a conversation on first and second electronic devices, and determining whether suggestion information exists in a database if the conversation satisfies a recommendation criterion. WO 2016/046824 A1 discloses monitoring textual content inputted to a user interface of an IM service, performing an analysis of the textual content to identify query conditions, and generating an interactive UI according to at least a portion of the query conditions.

### SUMMARY

Example embodiments relate to a system that allows automated assistants to join a chat session between multiple user devices. More specifically, example embodiments include identifying a query in an electronic message provided within a messaging exchange or conversation, typically from a first user device to at least a second user device within a computer-implemented messaging session; selecting one of a plurality of automated assistants to handle the query; and providing for display of an intervention request on the first user device to allow the selected automated assistant to intervene in the computer-implemented messaging session. In particular, the query may be an explicit or implicit query. The automated assistant may in some examples be selected using a ranking of the plurality of automated assistants from a handler index. This may involve, for example, determining a session-specific ranking of a plurality of automated assistants from the handler index to handle the query. Selection of an automated assistant and/or a ranking of assistants may be based, at least in part, on one or more context signals. The context signals may be received from one or both of the first and second user devices, and/or from another source. Such context signals are discussed in more detail below, but may include data such as device application usage, device location, and/or device motion.

In one aspect, a method is provided that includes identifying a query in a message between a first user device and a second user device within a computer-implemented messaging session. The method further includes receiving one or more context signals. The method also includes selecting, based on the one or more context signals, an automated assistant from a plurality of automated assistants to handle the query. The method additionally includes providing for display of an intervention request to allow the selected automated assistant to intervene in the computer-implemented messaging session.

In another aspect, a non-transitory computer readable medium is provided having stored therein instructions, that when executed by a computing system, cause the computing system to perform functions. The functions include identifying a query in a message between a first user device and a second user device within a computer-implemented messaging session. The method further includes receiving one or more context signals. The functions also include selecting, based on the one or more context signals, an automated assistant from a plurality of automated assistants to handle the query. The functions additionally include providing for display of an intervention request to allow the selected automated assistant to intervene in the computer-implemented messaging session.

In another aspect, a system is provided that includes at least one processor and a non-transitory computer readable medium having stored therein instructions, that when executed by the at least one processor, cause the at least one processor to perform functions. The functions include identifying a query in a message between a first user device and a second user device within a computer-implemented messaging session. The functions further include receiving one or more context signals. The functions also include selecting, based on the one or more context signals, an automated assistant from a plurality of automated assistants to handle the query. The functions additionally include providing for display of an intervention request to allow the selected automated assistant to intervene in the computer-implemented messaging session.

In another aspect, a computing device is provided. The computing device includes means for identifying a query in a message between a first user device and a second user device within a computer-implemented messaging session. The computing device further includes means for receiving one or more context signals. The computing device also includes means for selecting, based on the one or more context signals, an automated assistant from a plurality of automated assistants to handle the query. The computing device additionally includes means for providing for display of an intervention request to allow the selected automated assistant to intervene in the computer-implemented messaging session.

The foregoing summary is illustrative only and is not intended to be in any way limiting. The invention has been defined in the appended claims.

### BRIEF DESCRIPTION OF THE FIGURES

FIG. 1 depicts a distributed computing architecture, in accordance with example embodiments.
FIG. 2 is a flowchart of a method, in accordance with example embodiments.
FIG. 3A shows a messaging session, in accordance with example embodiments.
FIG. 3B illustrates matching automated assistants, in accordance with example embodiments.
FIG. 3C illustrates a ranking of matching automated assistants, in accordance with example embodiments.
FIG. 3D shows a contact request to allow an automated assistant to be added as a user contact, in accordance with example embodiments.
FIG. 3E shows user interface functionality associated with an automated assistant, in accordance with example embodiments.
FIG. 4A shows a join request to allow an automated assistant to join a chat session, in accordance with example embodiments.
FIGS. 4B and 4C show additional user interface functionality associated with an automated assistant, in accordance with example embodiments.
FIG. 5 is a functional block diagram of an example computing device, in accordance with example embodiments.

### DETAILED DESCRIPTION

Example methods and systems are described herein. Any example embodiment or feature described herein is not necessarily to be construed as preferred or advantageous over other embodiments or features. The example embodiments described herein are not meant to be limiting. It will be readily understood that certain aspects of the disclosed systems and methods can be arranged and combined in a wide variety of different configurations, all of which are contemplated herein.

Furthermore, the particular arrangements shown in the Figures should not be viewed as limiting. It should be understood that other embodiments might include more or less of each element shown in a given Figure. Further, some of the illustrated elements may be combined or omitted. Yet further, an example embodiment may include elements that are not illustrated in the Figures.

Users of mobile devices increasingly rely on text messaging as a form of communication. Generally, group messaging on mobile devices involves input from human participants using two or more separate user devices, such as cellular phones. Group messaging applications allow users to write messages, and to send media, such as pictures, videos or audio clips. However, sending media is often an interruptive experience. In particular, the user may need to close the messaging application, find the media in another application, copy it, go back to the messaging application, find the conversation again, and then finally paste the media. Once the media has been sent, it generally is not possible for the users to share ownership or control of an the media between users that are currently in the same conversation.

Example embodiments relate to shared experiences that involve having multiple automated assistants available that are able to join and leave conversations and contribute to them. As an example, two people may be engaged in a chat session in which they are discussing music. A particular song may come up in the discussion. A computing system may identify a user query to play the particular song based on a chat log of the discussion. The user query may be an explicit request or an implicit request deduced by the computing system.

In order to address the user query, the computing system may locate an appropriate automated assistant from a plurality of automated assistants. In some examples, the plurality of automated assistants may be stored in a handler index. The handler index may be a centrally stored compilation of assistants along with pieces of functionality that each assistant can provide. To select a particular assistant to join a chat session, a computing system use context signals. The context signals may be received from the user devices engaged in a chat session, and/or from other devices. Example context signals include location, time, temperature, speed, past application usage history, and future calendar appointments. An assistant in the handler index may be a conversational version of a corresponding mobile device application. For instance, to handle the music user query, an assistant corresponding to an application that plays music may be selected from the handler index.

Once an assistant is selected, an intervention request may be displayed on a user device to allow the assistant to join the chat session to respond to the query. For example, the intervention request may be displayed on the user device that provided an electronic message to the messaging session that triggered a query. The intervention request may indicate what functionality the assistant can provide (e.g., to play music) and a reason why the assistant was selected (e.g., discussion of a particular song). In some examples, the intervention request may be a contact request sent to at least one of the users to allow the assistant to become a contact of the user (e.g., added to the user's contact list on the user's mobile device). If the contact request is accepted by a user, the assistant may be added as a contact of the user and allowed to join the chat session. If the selected assistant is already a contact of a user, the intervention request may instead be a join request sent to the user to allow the assistant to join a specific chat session. In some examples, an assistant may be allowed to automatically join a messaging session without an intervention request. For instance, once an assistant becomes a contact of a user, the assistant may be allowed to join messaging sessions that involve the user without separate intervention requests for each session.

Once the assistant joins a chat session, the assistant may be provided with the user query and relevant context signals to allow the assistant to respond to the query within the chat session. For instance, in the music example, the assistant may locate the particular song being discussed and offer to play the song so that all of the users can experience it simultaneously. In addition or instead, the assistant may present a graphical user interface component that allows any of the chat participants to start playing the song. For instance, a first user may press play, which causes the song to start playing and both users will hear the song at the same time. The second user can then request the next song (e.g., by typing a request or otherwise asking the assistant to switch the song, or by interacting with the graphical user interface component). The song may then change for both users simultaneously as well. In some examples, while content is synchronized across users, the user interface interaction is not. In particular, it may work in a "pass the torch" manner in which only one user can interact with the user interface at a given time, but any user can follow up with the next interaction. Other methods of synchronization are also possible, and may depend on the particular assistant in the chat session.

Reference will now be made in detail to various embodiments, examples of which are illustrated in the accompanying drawings. In the following detailed description, numerous specific details are set forth in order to provide a thorough understanding of the present disclosure and the described embodiments. However, the present disclosure may be practiced without these specific details. In other instances, well-known methods, procedures, components, and circuits have not been described in detail so as not to unnecessarily obscure aspects of the embodiments.

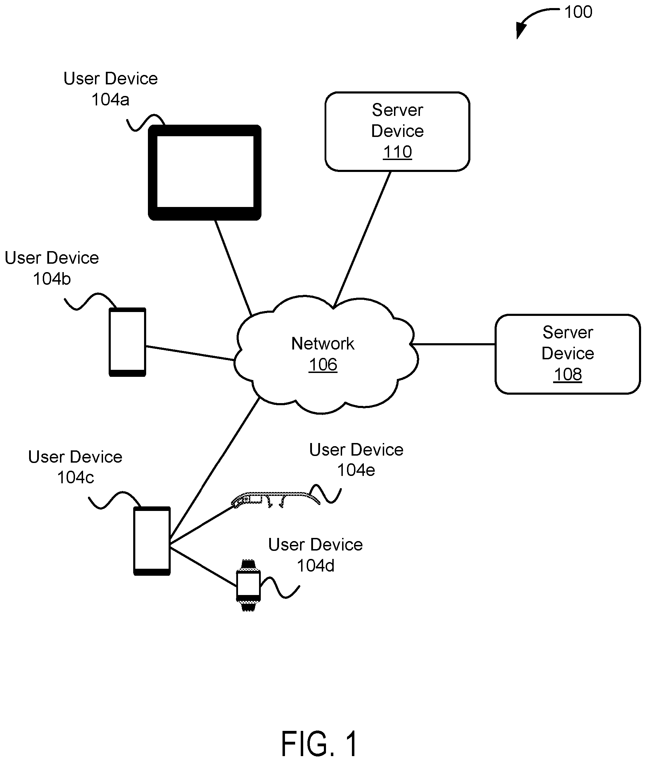

Figure 1 depicts a distributed computing architecture 100 with server devices 108, 110 configured to communicate, via network 106, with user devices 104a, 104b, 104c, 10-4d, 104e, in accordance with example embodiments. Network 106 may correspond to a local area network (LAN), a wide area network (WAN), a corporate intranet, the public Internet, or any other type of network configured to provide communication paths between networked computing devices. Network 106 may also correspond to a combination of one or more LANs, WANs, corporate intranets, and/or the public Internet.

Although Figure 1 only shows a small collection of user devices, distributed application architectures may serve tens, hundreds, or thousands of user devices. Moreover, user devices 104a, 104b, 104c, 104d, 104e (or any additional programmable devices) may be any sort of computing device capable of allowing a user to join a chat session, such as an ordinary laptop computer, desktop computer, wearable computing device, mobile computing device, head-mountable device (HMD), network terminal, wireless communication device (*e.g.*, a smartphone or cell phone), and so on. In some embodiments, such as indicated with user devices 104a, 104b, and 104c, user devices can be directly connected to network 106. In other embodiments, such as indicated with user devices 104d and 104e, user devices can be indirectly connected to network 106 via an associated computing device, such as user device 104c. In such embodiments, user device 104c can act as an associated computing device to pass electronic communications between user devices 104d and 104e and network 106. In still other embodiments not shown in Figure 1, a user device can be both directly and indirectly connected to network 106.

Server devices 108, 110 may operate as part of a cloud-based server system that shares computer processing resources and data to computers and other devices on demand. In particular, server devices 108, 110 can be configured to perform one or more services requested by user devices 104a-104e. For example, server device 108 and/or 110 can provide content to user devices 104a-104e. The content can include, but is not limited to, web pages, hypertext, scripts, binary data such as compiled software, images, audio, and/or video. The content can include compressed and/or uncompressed content. The content can be encrypted and/or unencrypted.

Within examples, server device 108 and/or 110 may provide content that facilitates a chat session between two or more of user devices 104a-104e. Additionally, server device 108 and/or 110 can provide user devices 104a-104e with access to software for database, search, computation, graphical, audio, video, World Wide Web/Internet utilization, and/or other functions. Many other examples of content are possible as well.

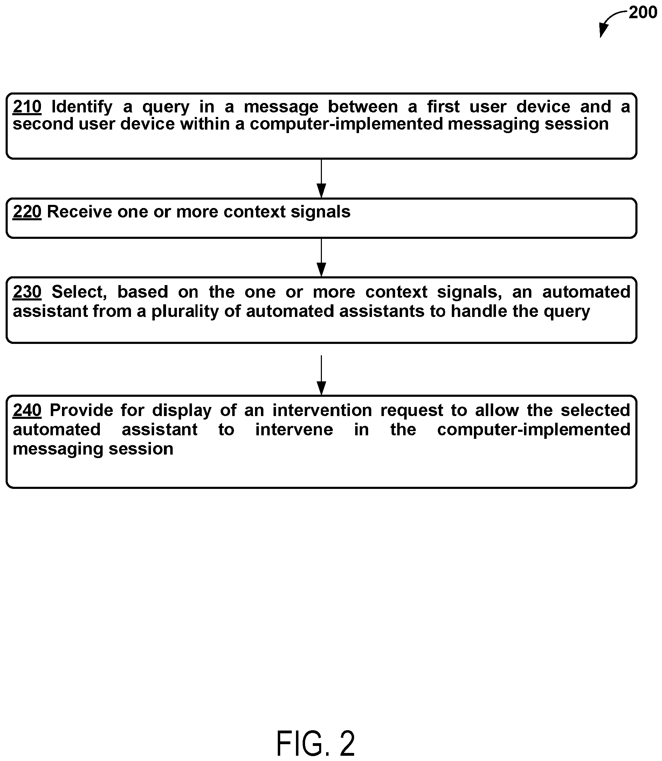

Figure 2 illustrates a flowchart showing a method 200 that may be performed to provide an intervention request to allow an automated assistant to join a messaging session, according to an example embodiment. Method 200 may be carried out by one or more computing devices, such as server 108 and 110 as illustrated and described with respect to Figure 1. In additional examples, method 200 may be carried out by one or more servers operating as part of a cloud-based server system. In further examples, part or all of method 200 may be executed locally by a client device, such as any of user devices 104a-104e. Additionally, method 200 may be performed by one or more other types of computing devices besides those specially illustrated in Figure 1.

Furthermore, it is noted that the functionality described in connection with the flowcharts described herein can be implemented as special-function and/or configured general-function hardware modules, portions of program code executed by a processor for achieving specific logical functions, determinations, and/or steps described in connection with the flowchart shown in Figure 2. Where used, program code can be stored on any type of computer-readable medium, for example, such as a storage device including a disk or hard drive.

In addition, each block of the flowchart shown in Figure 2 may represent circuitry that is wired to perform the specific logical functions in the process. Unless specifically indicated, functions in the flowchart shown in Figure 2 may be executed out of order from that shown or discussed, including substantially concurrent execution of separately described functions, or even in reverse order in some examples, depending on the functionality involved, so long as the overall functionality of the described method is maintained.

At block 210, method 200 includes identifying a query in an electronic message between a first user device and a second user device within a computer-implemented messaging session. In particular, two or more user computing devices may be engaged in a chat session in which any of the users may send messages. A chat log may include one or more text entries from one or more of the user computing devices. The text entries from the chat log may be processed to identify appropriate opportunities for automated assistants to join the chat session. More specifically, user queries may be identified for which an automated assistant is likely able to provide a useful response and/or responsive user interface functionality.

In general, any user statements within a chat session may be treated as queries on an index of handlers. In some examples, a user query may also be the result of a deduced user goal. In further examples, queries may identified by the system rapidly and continuously, often without notifying the user.

**In** some examples, queries may be triggered by an explicit goal provided by the user. For instance, an explicit goal may be a stated natural language goal such as "where is breakfast?" or an interaction with a device application that conveys a clear user request. In additional examples, queries may be triggered by an implicit goal deduced by the system. For instance, when a user navigates to a location using a mapping application, the user may have a deduced goal of wanting to know about the destination. In further examples, queries may be triggered by a change of circumstances. For instance, a query may be triggered when a user enters a location which has a number of smart devices present. As another example, a query may be triggered when an appointment is added or removed from a user device's calendar. Queries may be generated in other manners as well or instead.

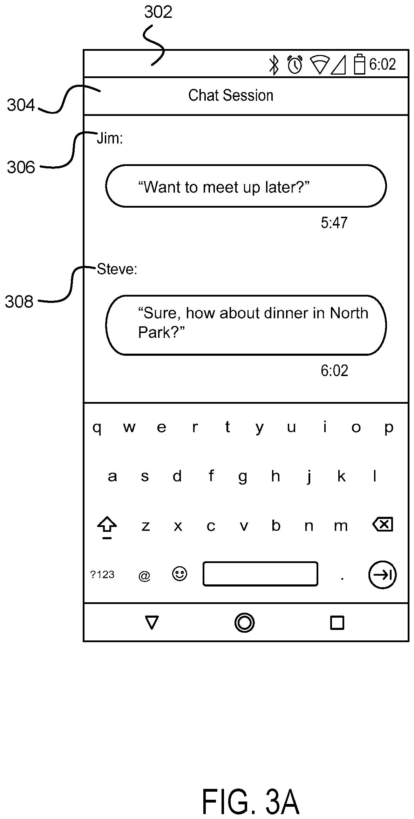

Figure 3A shows a chat session, in accordance with example embodiments. In particular, a user device 302 such as a cellular phone may display a portion of a chat session 304. The chat session 304 may include text entries from users 306 (Jim) and 308 (Steve). Each user 306, 308 may be connected to chat session 304 from a separate computing device. In additional examples, more than two users may join a chat session. In further examples, users may provide different types of entries in a chat session besides text entries, such as verbal entries, audio entries, or video entries.

A chat log of chat session 304 may be monitored in order to identify user queries. Each individual entry in the chat log from a user may be processed to determine if a query can be identified for which an assistant is likely able to provide a useful response. In this example, Jim's generic question about meeting later may not result in an identified user query for which an assistant is located. However, Steve's more specific question about dinner in North Park may result in a query for which an appropriate assistant can be located.

Referring back to Figure 2, at block 220, method 200 further includes receiving one or more context signals. Context signals may be received from any or all user devices engaged in a messaging session, as well as other external devices. Context signals may provide information about the current state of the user devices engaged in the chat session. Context signals may be used to help the system select appropriate assistants to join a chat session at the right points in time. In some examples, context signals may also be used to generate implicit user queries. In general, user context may be monitored on a per-chat basis.

Example context signals may include sensor data from user device sensors, such as time, temperature, speed of motion, and ambient noise. Certain types of context signals may also be received from other external sources. For instance, the time could be retrieved from a separate clock, or the temperature could be retrieved from a separate thermometer. Example context signals may further include deduced user activity, such listening to music, running, past or future calendar appointments, previously stated user goals, and user identity expressed as a token. Additional context signals may be environmental signals, such as weather conditions like rain.

Further example context signals may relate to user location. In some examples, location may be as simple as GPS coordinates. An expanded form of location may take into account the route of the user and the likelihood of the user to stray off the route. For instance, at commute time on a weekday, a user may be unlikely to stray from a train station and cross a nearby busy road. However, if the user is at the same train station on a weekend, the user may be more likely to explore. In further examples, location may refer to a location that is the topic of a chat session instead of or in addition to a user's current location.

Additional example context signals may relate to nearby devices. In particular, the nearby devices may include local devices and device classes that a user may interact with, such as smart lightbulbs and smart cars. The method of interaction may be Wi-Fi, Bluetooth, or some other mode of interaction.

Further example context signals may relate to previous application usage. In general, an assistant may be a conversational version of a corresponding application. Context signals may include indications whether each user device in a chat session has ever interacted with an application. For instance, context signals may include determining a number of user devices within the chat session that have the application installed and/or have the assistant added as a contact. Context signals may additionally include determining a frequency of usage of the application by each of the user devices. An automated assistant may be selected and/or a ranking of automated assistants may be determined based on the determined number of user devices having each application installed and/or the determined frequency of usage of each application. In some examples, the concept of installing a device application may generally be replaced by adding the corresponding assistant as a friend in a contact list.

In further examples, context signals related to application usage may extend beyond users in a particular chat session. For instance, application usage by any friends within a user's social graph and/or specifically by nearby friends may be considered. In additional examples, besides friends in a current chat session, application usage by friends on a current phone call or visible locally via Bluetooth may be considered as context signals.

Any of the context signals previously described may also be used in combination. For instance, a user query about a particular smart device in the user's current location may lead to contact request from an assistant with the greatest corresponding frequency of application usage by the user's friends when the user's friends were close to the same type of smart device.

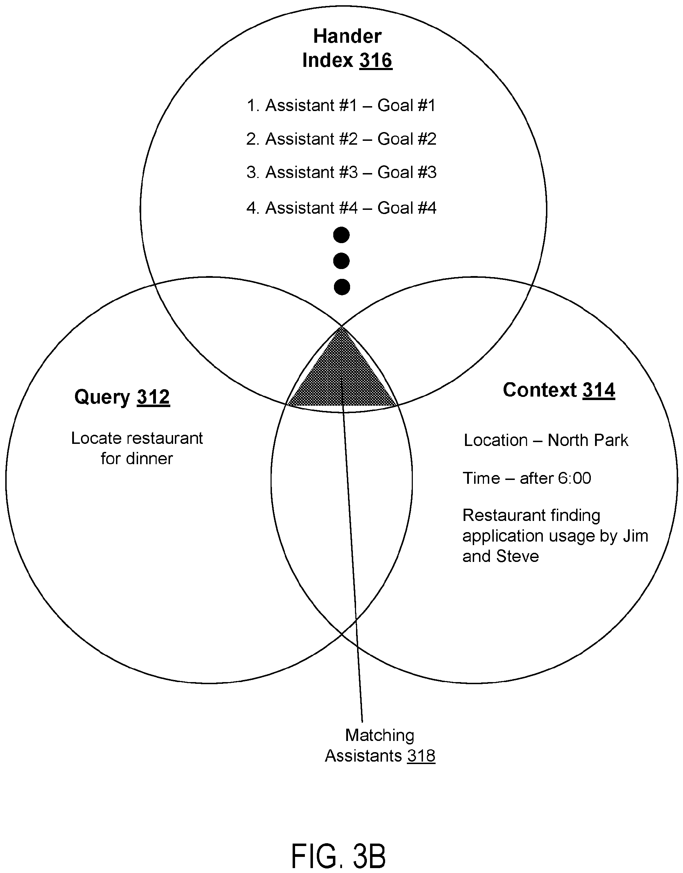

Figure 3B illustrates matching automated assistants, in accordance with example embodiments. In this example, an assistant may be selected to handle query 312 to locate a restaurant for dinner from matching assistants 318, which may be retrieved from handler index 316. To assist in this process, relevant context signals 314 may be received. The context signals 314 may include a location for the restaurant (North Park), which may be based on the discussion of location in the chat session and/or locations of the user devices engaged in the chat session. The context signals 314 may additionally include time (after 6:00), which may be based on the current time as well as how far away the user devices are from the target location. The context signals 314 may further include previous restaurant finding application usage by Jim and Steve, which may indicate a preferred assistant for the chat session.

At block 230, the method 200 further includes selecting an automated assistant from a plurality of automated assistants to handle the query. The selection may be based on the one or more received context signals. In some examples, the selection may be based on a session-specific ranking of the plurality of automated assistants that considers the set of user devices in a specific chat session as well as recently received context signals. The highest ranking assistant may be selected to handle the user query. For instance, a match score may be computed for each assistant, and the highest scoring assistant may be chosen. In some examples, an assistant may only be selected if it has a match score above some predetermined threshold level. In other examples, two or more handlers may be presented to a user to allow for user selection. In some cases, additional handlers may only be displayed after an initially selected handler is rejected by a user.

The selected automated assistance may be selected from a handler index. A handler index refers to an index of handlers capable of responding to one or more types of user queries. A handler is an automated assistant that is capable of meeting some user goal type. In some examples, a handler is a conversational chat assistant which may provide an equivalent of deep linking to jump straight into a conversation in a chat session. In further examples, a handler is an application which can provide application activities in the form of graphical user interface components (e.g., cards or instant apps). In additional examples, a handler may include both a conversational entity as well as an application capable of providing user interface components.

To determine a ranking of handlers, the context signals from each of the user devices may be processed to order the handlers from the handler index according to their ability to provide the best user experience in responding to a user query. More specifically, handlers may be ranked according to both the context of the individual user devices and the context of the chat session.

In alternative examples, an automated assistant may be selected from a plurality of assistants in other manners without determining an explicit ranking of automated assistants. For example, an automated assistance may be selected by processing context signals directly without generating a ranking. In further examples, an automated assistant may be selected from a plurality of assistants without receiving and/or relying on context signals.

Referring back to Figure 3B, handler index 316 may include a number of assistants and corresponding goals. In some cases, a single assistant may be able to respond to a number of different user goal types. The user query 312 and context signals 314 may be used to select a group of matching assistants 318 from the handler index 316. The matching assistants 318 may then be ranked based on the system's evaluation of their ability to best respond to user query 312 given the context signals 314.

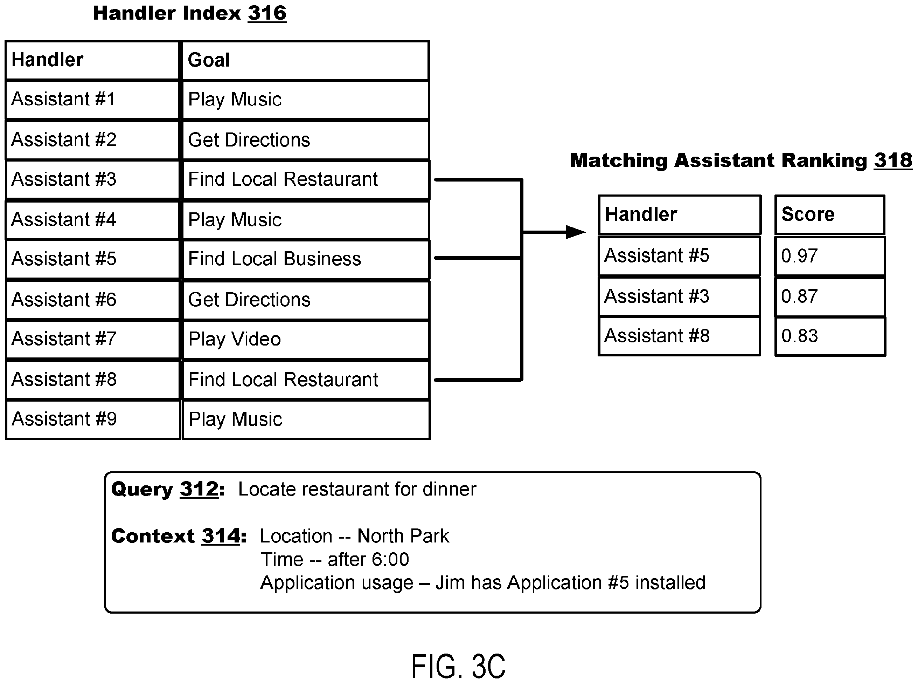

Figure 3C illustrates a ranking of matching automated assistants, in accordance with example embodiments. More specifically, an example handler index 316 is shown that includes nine automated assistants and corresponding goals that each of the assistants can fulfill. In this case, based on the query 312 to locate a restaurant for dinner, three matching assistants (Assistant #'s 3, 5, and 8) may be chosen from the handler index 316 that are capable of finding restaurants. The three assistants may be then ranked based on context signals 314. The resulting matching assistant ranking 318 ranks the three matching assistants. For instance, in some examples, a separate match score is computed for each matching assistant. The match score may indicate how well the assistant matches the query given the context signals. The highest scoring assistant may be selected to handle the user query.

In this example, Assistant #5 may be selected from the handler index 316 to handle user query 312, even though Assistant #5 generally handles a less specific goal (to find a local business) than Assistant #3 and Assistant #8 (which specifically find restaurants). In this case, Assistant #5 may be selected to respond to the user query 312 from Steven based in large part on the context signal 314 that Jim has Application #5 installed, which may be the application corresponding to Assistant #5. In some examples, it may be unlikely or impossible for an assistant to be selected if none of the users in a chat session have the corresponding user device application installed (or the assistant listed as a contact in their device's contact list).

In other examples, a group of two or more assistants may be selected from the handler index. The group may then be displayed in ranked order to allow chat participants to select from the list to decide which assistant to allow to join a chat session.

In further examples, a handler can be thought of as an offer to help meet some goal type, plus space for parameters. To achieve this, a structured graph of user goals may be maintained. For instance, when a user navigates to an airport, the goal of "reaching the airport" may be connected in the graph to the goal of "checking in to a flight." When a user query is made, it may then be expressed as a goal type, certain parameters such as "London Heathrow," and context like time of day.

In additional examples, the system may keep track of which handlers match which queries, and also track when the handlers are successful. Ranking quality may be improved by measuring user success in achieving the goal contained in the original query.

In further examples, developers may also tag handlers to assist a system in selecting appropriate handlers. For instance, handlers may be tagged with place (e.g., a train scheduling application may be tagged as relevant at train stations). As another example, handlers may be tagged against a registry of devices. For instance, a number of different handlers corresponding to different home security applications that all work with a particular piece of home security hardware may tag themselves against the particular piece of hardware.

The handler index may be maintained and stored at a central server location. The handler index or some portion of the handler index may also be maintained separately on a user device as well or instead. For instance, the index may be shared and anonymized centrally, but also maintained privately on a user's smartphone. By storing the handler index at a central location (including some idea of what functions each assistant can provide), a particular assistant can be selected without having to send any confidential user information to the assistant.

Referring back to Figure 2, at block 240, method 200 may include providing for display of an intervention request to allow the selected automated assistant to intervene in the computer-implemented messaging session. In some cases, an intervention request may only be provided to the user who provided the electronic message or chat entry which triggered a user query leading to selection of the automated assistant. In other examples, an intervention request may be sent to a different user or multiple users. In some of those examples, any of those users can authorize the assistant to join the chat session. In additional of those examples, multiple users may be required to authorize the assistant to join the chat session (e.g., every user or a majority of users).

In some examples, the intervention request may be sent as a contact request the first time the user interacts with a particular assistant. The assistant may then be added to the user's contact list on the user's computing device. In subsequent chat sessions, a join request may instead be sent to the user to allow the assistant to join a particular chat session. The join request may indicate that the assistant is already a contact of the user. In some examples, a lower match score threshold may be required to initiate a join request from a previously used assistant than an initial contact request. In further examples, once an assistant becomes a contact of a user, subsequent intervention requests may not be required to allow the assistant to join chat sessions involving the user. In yet further examples, an intervention request may not be required at all to allow a particular assistant to join a chat session. For instance, if the particular assistant is determined to be a very strong match for a particular user query, the particular assistant may automatically be joined into a particular conversation.

In general, an intervention request (e.g., a contact request or a join request) may have a consistent and meaningful format. In particular, the intervention request may include a statement of a relevant piece of functionality that the assistant can provide to the chat session. The relevant piece of functionality may be a respective piece of functionality stored for the assistant in the handler index. The intervention request may additionally include a statement as to why the system is introducing the assistant. In some examples, the statement may include a relevant chat entry from the user that triggered the query. In further examples, the statement may include a relevant context signal (e.g., the user's location) that triggered the query or caused the assistant to be selected. The statement may also include both a relevant chat entry and a relevant context signal.

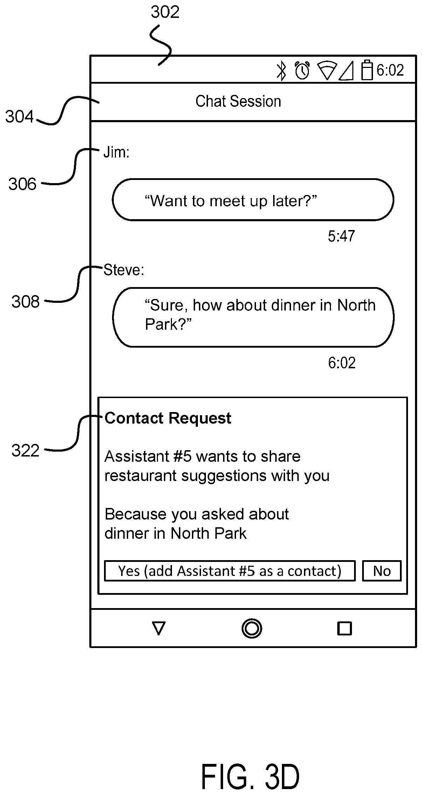

Figure 3D shows a contact request to allow an automated assistant to be added as a user contact, in accordance with example embodiments. More specifically, contact request 322 may be provided by a server to user device 302 to allow Assistant #5 to join chat session 304. The contact request may be provided to user 308 (Steve) because Steve asked the question which prompted the user query leading to the contact request. If the request was instead sent to user 306 (Jim), it may instead be a join request since Jim already has Assistant #5 as a contact from a previous interaction.

The contact request 322 may identify the chat assistant requesting to the join the chat session (Assistant #5). Additionally, the contact request 322 may include an indication of a relevant piece of information that Assistant #5 can provide (restaurant suggestions). In some cases, this piece of information may be stored centrally in a handler index. The contact request 322 may also include an indication of a reason that the contact request 322 is being provided to Steve. In particular, the contact request 322 includes an indication of a relevant chat entry from Steve that triggered the contact request 322 (his question about dinner in North Park). In further examples, the contact request 322 could include a relevant context signal as well or instead. For instance, the contact request 322 could include an indication that Jim already has Assistant #5 as a contact.

If Steve accepts the contact request 322, Assistant #5 may be added as a contact to Steve's contact list. Assistant #5 may also join the chat session 304. A subsequent intervention request to the particular user device associated with Steve for Assistant #5 to join a different computer-implemented messaging session to handle a different query may then be presented as a join request. Alternatively, once Assistant #5 is added as a contact, Assistant #5 may be allowed to automatically join subsequent chat sessions involving Steve without additional intervention requests.

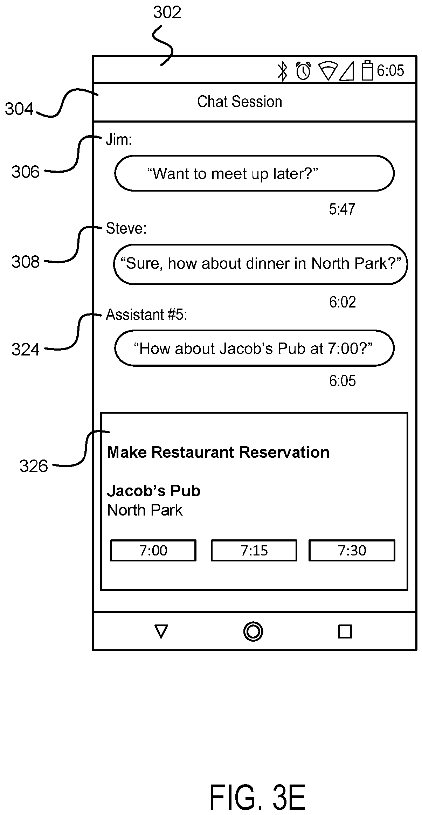

Figure 3E shows user interface functionality associated with an automated assistant, in accordance with example embodiments. In particular, Assistant #5 is allowed to join the chat session 304 as a separate user 324 alongside user 306 (Jim) and user 308 (Steve). After authorization is received to allow Assistant #5 to join the chat session, Assistant #5 may be provided with information to allow Assistant #5 to address the user query. In particular, a server may provide Assistant #5 with the user query, some portion of the previous chat log, and/or any relevant context signals. Assistant #5 may then respond within the chat session 304 with text and/or a user interface component. Any response from Assistant #5 may be viewed on user device 302 and any other user device currently viewing chat session 304.

In examples, user interface pieces may be embedded within a conversation that also includes users and/or assistants exchanging messages. The user interface pieces may then be displayed within a chat session in a number of different manners after the user interface pieces have been interacted with (by either single or multiple users).

In some examples, a user interface piece may stay in the same position in the message history after it has been introduced into a chat session. Users may then need to scroll backward in history to find the user interface piece to interact with it again.

In other examples, a user interface piece may be moved to the most recent position in the message history each time it has been interacted with. Accordingly, when the user interface piece is at the bottom of the chat session, this reflects that a user interface interaction was the most recent action performed by a user in the chat session.

In further examples, a new copy of the same user interface piece may always be displayed at the most recent position in the message history, showing the most recent configuration or user input. The original user interface piece may stay at the same place in the message history. In some cases, the original piece may still be interactive, duplicating the new copy. In other cases, the original piece may be locked from user interaction.

In additional examples, a user interface piece in a conversation is not rendered in an exact position within conversation history, but is displayed proximate to the part of the conversation that the user interface piece is relevant to. For instance, the user interface piece may be displayed on the side or above the relevant part of the conversation.

In further examples, user interface pieces may or may not be dismissible by the users within a conversation. In additional examples, users may have an option to enter a full-screen service or application from which the user interface piece in the message stream originated.

In Figure 3E, Assistant #5 provides both a text response suggesting a restaurant and time, as well as an application 326 that allows a reservation to be made. The application 326 may be viewed by both human users 306, 308 on their respective user devices. Additionally, either user 306, 308 may be able to interact with the application 326 to make the reservation. The state of the application 326 may then be updated so that both users 306, 308 can see the resulting reservation. In some examples, the source code to run the application 326 may not be stored locally on either user device. Instead, the application 326 may be run in the cloud, and the current state of the application 326 may be periodically sent to each user device. In this manner, both users can interact with the application 326 without any extra local installation. In another example, an application may be run only on a single user device and streamed to each of the other user devices.

Subsequent chat entries from either user 306, 308 may automatically be sent to Assistant #5 to allow for refinement of the user query and response. Once a contact request or join request is accepted, it may be treated as an indication that the users are now comfortable with their statements being shared with Application #5, which may be a remote third-party application. In some examples, after Assistant #5 has joined the computer-implemented messaging session, an additional implicit or explicit query may identified in a subsequent electronic message provided to the chat session and the query may automatically be sent to Application #5 for processing.

In general, a chat assistant may be developed by an application developer, and use system-provided frameworks for interpreting user input and for providing features like smart replies. Smart replies are a set of partial replies that a user can select from to more quickly respond to an inquiry. In some examples, the smart replies may then be filled in by voice input. Smart replies may be designed to shortcut as much of the conversation as possible. They also may be designed to make it easy for a user to repair an incorrect assumption. For example, if the top-ranked answer for a user query is incorrect, one of the smart replies may be for the user to see all possible answers together, instead of cycling through them one by one. Accordingly, chat assistants may be intrinsically multimodal. The primary interface may be a keyboard, but accelerated input options may be available for applications to use where appropriate.

There are a number of possible advantages to using chat assistants for application functionality. For one, the system is activity focused. Multiple chat assistants can be brought into a single chat, keeping all interaction related to a single task together. Users may also be given the ability to invite additional assistants to a chat session. Furthermore, multiple instances of a single application may be run in separate chat rooms. For instance, a mapping application showing three entirely different locations may be displayed in each of three different chat sessions including a single user simultaneously.

Additionally, the system may be proactive. By being conversational, an assistant can be given greater permission to make recommendations and interrupt a discussion. As more services perform work in the background and apply machine learning to generate suggestions, it may be beneficial to have an interface that accommodates this behavior. The interface also allows a user to discover more applications without having to search an application store.

As a further benefit, the chat interface is highly familiar to many users. By making applications more social, application functionality may be brought closer to a user's typical interactions. In this regard, the personality of a chat assistant can be adjusted based on the types of services that the corresponding user device application provides.

In further examples, one user may be prompted to allow another user to add an assistant as a contact. For instance, a context signal may be received indicating that a first user is nearby an interactive computing device, such as an audio system. However, the first user may need authorization to control the audio system. The first user may initiate a chat session with the owner of the audio system. The owner could then be prompted with an authorization request to ask for authorization to allow the first user to play music on the audio system. If the owner agrees, an assistant may then join the chat session which has functionality that allows the first user to control the audio system.

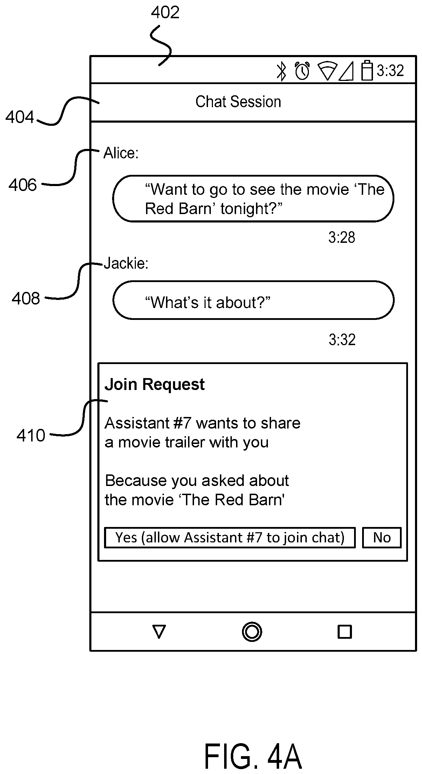

In reference now to Figure 4A, Figure 4A shows a join request to allow an automated assistant to join a chat session, in accordance with example embodiments. More specifically, user device 402 may display a chat session 404 between user 406 (Alice) and user 408 (Jackie). In this case, the users are discussing a new movie in the chat session 404. The system may monitor a chat log (e.g., the text entries from each user) and identify a user query as well as an assistant that can handle the user query. In particular, Jackie's question asking what the movie is about may be identified as an appropriate time to invite Assistant #7, which is capable of playing a trailer for the movie so that each of the users 406, 408 can simultaneously view the movie trailer.

In this case, a join request 410 for Assistant #7 may be sent to the user device corresponding to Jackie because her question prompted the query that led to the join request 410. A join request 410 may be sent instead of a contact request in the case where Jackie already has Assistant #7 on her contact list. The join request 410 may include a relevant piece of application functionality that Assistant #7 can provide (playing a movie trailer) as well as a relevant entry in the chat that prompted the joint request (Jackie's question about the new movie). Jackie may be given the option to allow Assistant #7 to join the chat session 404 or not. If Assistant #7 is allowed to join, then both Alice and Jackie may be able to interact with Assistant #7 in the chat session 404.

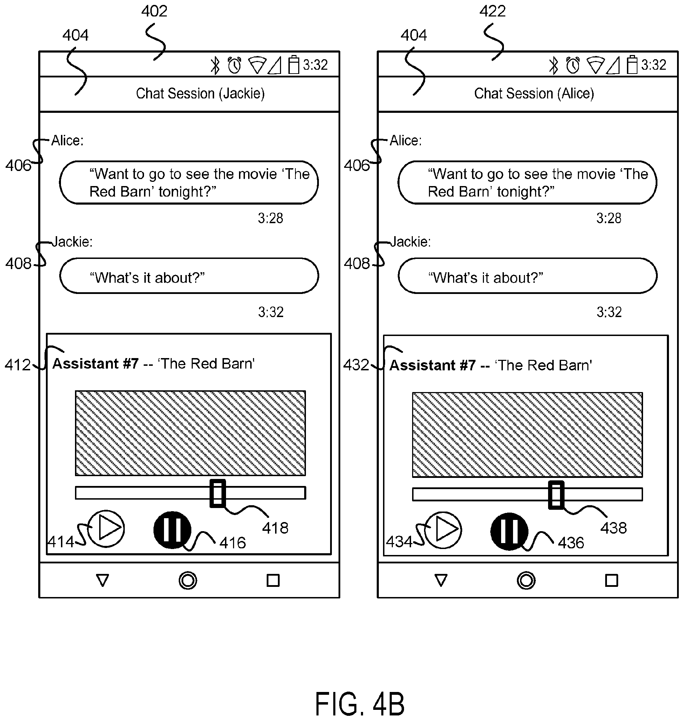

Figure 4B shows both user devices in a chat session where each user device can interact with an automated assistant. More specifically, user device 402 may be Jackie's user device that is displaying a chat session 404 between user 406 (Alice) and user 408 (Jackie) in which Assitant #7 has joined the chat session. Additionally, user device 422 may be Alice's user device that is displaying the same chat session 404. When Assistant #7 provides a user interface component to play a movie trailer, the component may be displayed on both user device 402 and user device 422. Either user may interact with the UI component, and both users may then be able to view the results of that interaction.

In this case, each user device may display the application. In particular, user device 402 may display UI component 412 with a play button 414, a pause button 416, and a current time marker 418. User device 422 may separately display UI component 432 with a play button 434, a pause button 436, and a current time marker 438. In this case, Jackie may press the pause button 416, which pauses the video on user device 402. Additionally, the state of the UI component 432 on user device 422 may be updated to reflect Jackie's interaction. In particular, the pause button 436 may automatically be depressed and the video may also pause within UI component 432 on user device 422.

In this manner, a "pass the torch" control scheme may be used when media such as video or audio is played across multiple user devices. One user can pause the content, a different user can cause the content to start playing again, another user can select a next song to play, and so on. In each instance, the application on each device updates its state so that each user can see the updated state. Because a chat log is chronological, each interaction by a user with the application may create a new entry in the chat log. In some instances, however, it may not be desirable to automatically update application state across each user device when a given user interacts with the application.

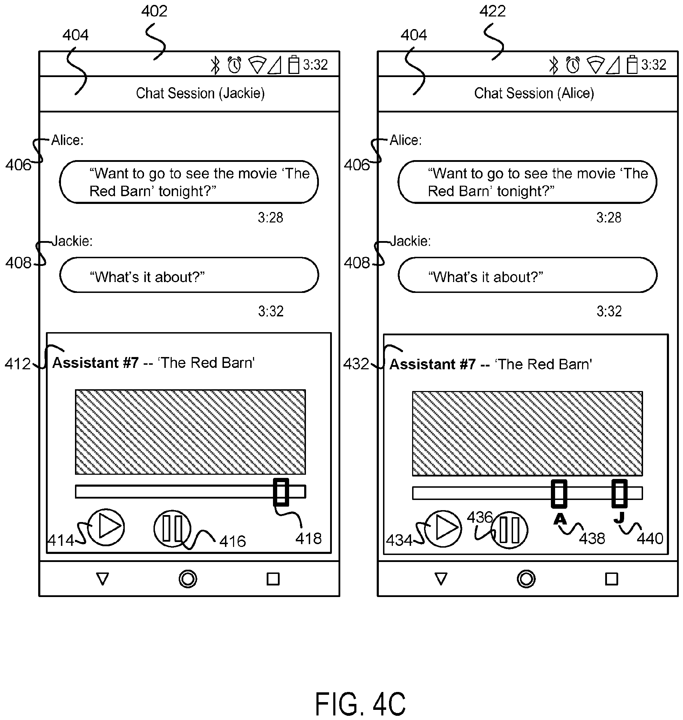

Figure 4C shows the same two user devices engaged in a chat session with an automated assistant as in Figure 4B. In this case, rather than pressing the pause button 416, Jackie may move the current time marker 418 to jump to a different portion of the movie trailer. It may be determined that automatically synchronizing the state of the video within UI component 432 on Alice's user device 422 may be disorienting. As an alternative control scheme, user device 422 may be provided with the timestamp of the current portion of the content stream being viewed by Jackie. However, instead of updating the current time marker 438 in UI component 432, UI component 432 may instead display a second time marker 440 that indicates what portion of the video stream Jackie is viewing. This functionality provides Alice with the option to synchronize her content stream with Jackie, but doesn't automatically cause a synchronized application state unless Alice choose to initiate a synchronized state. In some cases, a number of different synchronization schemes may be supported by the system framework, and a third-party application developer can select between them as desired for particular application behavior.

In further examples, the interactions described herein involving a user and one or more automated assistants can occur when there is only a single user in a conversation. In particular, the same paradigm for an interaction on a device can be used with any number of users, including a single user. A single user can join a chatroom and start a conversation, and be the only user in the chatroom, while automated assistants can join depending on what the user says. More specifically, a user can start a new conversation by initiating a direct chat with one of the assistants or by typing a query in an empty conversation or chat room, after which an assistant appropriate to the context will join. Assistants will react to context and what is being said by all human users in the conversation, even if that conversation has only a single human user.

Additionally, it is explicitly contemplated that the previously described functionality involving context signals and a handler index may be used with a single human user. As an illustrative example, an example method includes identifying an implicit or explicit query in an electronic message provided from a first user device within a computer-implemented messaging session. The method further includes receiving one or more context signals from the first user device. The method additionally includes determining, based on the one or more context signals, a session-specific ranking of a plurality of automated assistants from a handler index to handle the implicit or explicit query. The method also includes selecting an automated assistant from the handler index to handle the implicit or explicit query based on the session-specific ranking of the plurality of automated assistants. The method further includes providing for display of an intervention request on the first user device to allow the selected automated assistant to intervene in the computer-implemented messaging session to respond to the implicit or explicit query.

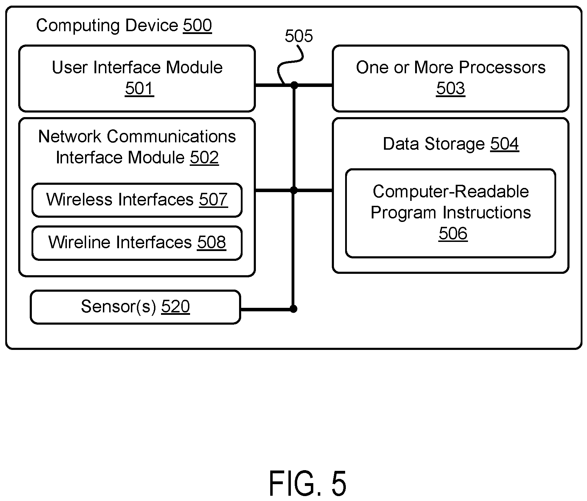

Figure 5 is a functional block diagram of computing device 500, in accordance with example embodiments. In particular, computing device 500 shown in Figure 5 can be configured to perform at least one function of server device 108 and/or 110, any of user device 104a-104e, method 200, user device 302, user device 402, and/or user device 422 as previously described.

Computing device 500 may include a user interface module 501, a network-communication interface module 502, one or more processors 503, data storage 504, and one or more sensors 520, all of which may be linked together via a system bus, network, or other connection mechanism 505.

User interface module 501 can be operable to send data to and/or receive data from external user input/output devices. For example, user interface module 501 can be configured to send and/or receive data to and/or from user input devices such as a keyboard, a keypad, a touch screen, a computer mouse, a track ball, a joystick, a camera, a voice recognition module, and/or other similar devices. User interface module 501 can also be configured to provide output to user display devices, such as one or more cathode ray tubes (CRT), liquid crystal displays, light emitting diodes (LEDs), displays using digital light processing (DLP) technology, printers, light bulbs, and/or other similar devices, either now known or later developed. User interface module 501 can also be configured to generate audible output(s), such as a speaker, speaker jack, audio output port, audio output device, earphones, and/or other similar devices. User interface module 501 can further be configured with one or more haptic devices that can generate haptic output(s), such as vibrations and/or other outputs detectable by touch and/or physical contact with computing device 500. In some embodiments, user interface module 501 can be used to provide a graphical user interface (GUI) for utilizing computing device 500.

Network-communications interface module 502 can include one or more wireless interfaces 507 and/or one or more wireline interfaces 508 that are configurable to communicate via a network. Wireless interfaces 507 can include one or more wireless transmitters, receivers, and/or transceivers, such as a Bluetooth transceiver, a Zigbee transceiver, a Wi-Fi transceiver, a WiMAX transceiver, and/or other similar type of wireless transceiver configurable to communicate via a wireless network. Wireline interfaces 508 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network.

**In** some embodiments, network communications interface module 502 can be configured to provide reliable, secured, and/or authenticated communications. For each communication, information for ensuring reliable communications (i.e., guaranteed message delivery) can be provided, perhaps as part of a message header and/or footer (*e.g.*, packet/message sequencing information, encapsulation header(s) and/or footer(s), size/time information, and transmission verification information such as CRC and/or parity check values). Communications can be made secure (e.g., be encoded or encrypted) and/or decrypted/decoded using one or more cryptographic protocols and/or algorithms, such as, but not limited to, DES, AES, RSA, Diffie-Hellman, and/or DSA. Other cryptographic protocols and/or algorithms can be used as well or in addition to those listed herein to secure (and then decrypt/decode) communications.

One or more processors 503 can include one or more general purpose processors, and/or one or more special purpose processors (e.g., digital signal processors, graphics processing units, application specific integrated circuits, etc.). One or more processors 503 can be configured to execute computer-readable program instructions 506 that are contained in data storage 504 and/or other instructions as described herein.

Data storage 504 can include one or more computer-readable storage media that can be read and/or accessed by at least one of one or more processors 503. The one or more computer-readable storage media can include volatile and/or non-volatile storage components, such as optical, magnetic, organic or other memory or disc storage, which can be integrated in whole or in part with at least one of one or more processors 503. In some embodiments, data storage 504 can be implemented using a single physical device (e.g., one optical, magnetic, organic or other memory or disc storage unit), while in other embodiments, data storage 504 can be implemented using two or more physical devices.

Data storage 504 can include computer-readable program instructions 506 and perhaps additional data. In some embodiments, data storage 504 can additionally include storage required to perform at least part of the herein-described methods, scenarios, and techniques and/or at least part of the functionality of the herein-described devices and networks.

In some embodiments, computing device 500 can include one or more sensors 520. Sensor(s) 520 can be configured to measure conditions in an environment of computing device 500 and provide data about that environment. For example, sensor(s) 520 can include one or more of: (i) an identification sensor to identify other objects and/or devices, such as, but not limited to, an RFID reader, proximity sensor, one-dimensional barcode reader, two-dimensional barcode (e.g., Quick Response (QR) code) reader, and a laser tracker, where the identification sensor(s) can be configured to read identifiers, such as RFID tags, barcodes, QR codes, and/or other devices and/or object configured to be read and provide at least identifying information; (ii) sensors to measure locations and/or movements of computing device 500, such as, but not limited to, a tilt sensor, a gyroscope, an accelerometer, a Doppler sensor, a Global Positioning System (GPS) device, a sonar sensor, a radar device, a laser-displacement sensor, and a compass; (iii) an environmental sensor to obtain data indicative of an environment of computing device 500, such as, but not limited to, an infrared sensor, an optical sensor, a light sensor, a camera, a biosensor, a capacitive sensor, a touch sensor, a temperature sensor, a wireless sensor, a radio sensor, a movement sensor, a microphone, a sound sensor, an ultrasound sensor, and/or a smoke sensor; and (iv) a force sensor to measure one or more forces (e.g., inertial forces and/or G-forces) acting about computing device 500, such as, but not limited to one or more sensors that measure: forces in one or more dimensions, torque, ground force, friction, and/or a zero moment point (ZMP) sensor that identifies ZMPs and/or locations of the ZMPs. Many other examples of sensor(s) 520 are possible as well.

Sensor(s) 520 may also include one or more presence-sensitive sensors that detect nearby objects using radar or a different detection method. For example, a presence-sensitive sensor may be used to detect when a user waves her hand past the sensor, taps the sensor, or makes some other specific non-contact gesture. Additionally, a presence-sensitive sensor may be able to detect hover input indicating that the user is hovering over the sensor with one or more of her fingers.

In situations in which the systems discussed here collect personal information about users, or may make use of personal information, the users may be provided with an opportunity to control whether programs or features collect user information (e.g., information about a user's social network, social actions or activities, profession, a user's preferences, or a user's current location), or to control whether and/or how to receive content from a content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

The present disclosure is not to be limited in terms of the particular embodiments described in this application, which are intended as illustrations of various aspects. Many modifications and variations can be made, as will be apparent to those skilled in the art.

The above detailed description describes various features and functions of the disclosed systems, devices, and methods with reference to the accompanying figures. In the figures, similar symbols typically identify similar components, unless context dictates otherwise.

A block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code and/or related data may be stored on any type of computer readable medium such as a storage device including a disk or hard drive or other storage medium.

The computer readable medium may also include non-transitory computer readable media such as non-transitory computer-readable media that stores data for short periods of time like register memory, processor cache, and random access memory (RAM). The computer readable media may also include non-transitory computer readable media that stores program code and/or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software and/or hardware modules in the same physical device. However, other information transmissions may be between software modules and/or hardware modules in different physical devices.

While various aspects and embodiments have been disclosed herein, other aspects and embodiments will be apparent to those skilled in the art. The various aspects and embodiments disclosed herein are for provided for explanatory purposes and are not intended to be limiting, with the true scope being indicated by the following claims.

## Claims

1. A method (200), comprising:
identifying (210) a query in a message between a first user device and a second user device within a computer-implemented messaging session;
receiving (220) one or more context signals;
retrieving a plurality of automated assistants from a handler index that comprises at least one respective piece of functionality providable by each of the plurality of automated assistants;
selecting (230), based on the query, the pieces of functionality, and the one or more context signals, an automated assistant from the plurality of automated assistants to handle the query;
providing (240) for display of an intervention request to allow the selected automated assistant to intervene in the computer-implemented messaging session;
receiving authorization to allow the selected automated assistant to intervene in the computer-implemented messaging session; and
in response to receiving the authorization, providing the query and the one or more context signals to the selected automated assistant to allow the selected automated assistant to respond to the query within the computer-implemented messaging session.

2. The method of Claim 1,
wherein identifying the query in the message between the first user device and the second user device comprises identifying an implicit query in the message; and/or
wherein at least one of the one or more context signals is received from one of the first user device and the second user device.

3. The method of Claim 1 or 2, further comprising:
determining, based on the one or more context signals, a ranking of the plurality of automated assistants; and
selecting the automated assistant based on the ranking;
optionally wherein the ranking comprises a session-specific ranking.

4. The method of any one of Claims 1-3,
wherein the one or more context signals comprise sensor data from one or more sensors on each of the first user device and the second user device; and/or
wherein the one or more context signals comprise one or more of a location of a user device, a speed of motion of a user device, a temperature at a user device, ambient noise at a user device, a future calendar appointment of a user device, and an application running on a user device.

5. The method of any one of Claims 1-4,
wherein each of the plurality of automated assistants has a corresponding user device application, and the method further comprises:
determining, for each of the plurality of automated assistants, a number of user devices in the computer-implemented messaging session that have the corresponding user device application installed; and
selecting the automated assistant based on the determined number of user devices for each automated assistant;
and/or wherein each of the plurality of automated assistants has a corresponding user device application, and the method further comprises:
determining, for each automated assistant, a frequency of usage of the corresponding user device application by each user device in the computer-implemented messaging session; and
selecting the automated assistant based on the determined frequency of usage for each automated assistant.

6. The method of any one of Claims 1-5, further comprising:
determining, based on the query, a relevant piece of functionality from the handler index providable by the selected automated assistant, wherein the intervention request further comprises an indication of the relevant piece of functionality;
optionally wherein the method further comprises:
determining a relevant context signal from the one or more context signals, wherein the relevant context signal is related to the relevant piece of functionality, wherein the intervention request further comprises an indication of the relevant context signal.

7. The method of any one of Claims 1-6, further comprising:
after the automated assistant has joined the computer-implemented messaging session, identifying an additional query in a subsequent message provided to the computer-implemented messaging session; and
providing the additional query to the automated assistant;
and/or wherein the method further comprises:
after the automated assistant has joined the computer-implemented messaging session, providing instructions to a user device in the computer-implemented messaging session to add the automated assistant to a contact list stored on the user device;
selecting the automated assistant to handle a different query identified from a different computer-implemented messaging session that includes the user device; and
providing a subsequent intervention request to the user device to allow the automated assistant to join the different computer-implemented messaging session, wherein the subsequent intervention request indicates that the automated assistant is in the contact list stored on the user device.

8. The method of any one of Claims 1-7, wherein the automated assistant includes a graphical user interface component, and the method further comprises:
providing for display of the graphical user interface component within the computer-implemented messaging session on each of the first user device and the second user device.

9. The method of Claim 8, wherein the graphical user interface component is executed by a cloud-based server system that streams a current state of the graphical user interface to each of the first user device and the second user device;
optionally wherein the method further comprises:
receiving an interaction with the graphical user interface component from the first user device that alters a state of the graphical user interface component; and
responsively providing instructions to cause the second user device to alter the state of the graphical user interface component displayed on the second user device.

10. The method of Claim 9, further comprising:
receiving an interaction with the graphical user interface component from the first user device that alters a state of the graphical user interface component; and
responsively providing instructions to cause the second user device to display an indication of the state of the graphical user interface component on the first user device;
optionally wherein the indication of the state of the graphical user interface component on the first user device comprises a timestamp of a content stream currently being accessed by the first user device.

11. The method of any one of Claims 1-10, wherein the one or more context signals comprise a proximity of the first user device to a remote interactive computing device;
optionally wherein the method further comprises providing an authorization request to the second user device to authorize the first user device to interact with the remote interactive computing device, wherein the selected automated assistant enables the first user device to interact with the remote interactive computing device after the selected automated assistant has joined the computer-implemented messaging session.

12. The method of any one of Claims 1-11, further comprising:
after the automated assistant has joined the computer-implemented messaging session, receiving from the automated assistant a plurality of partial replies; and
providing instructions to each of the first user device and the second user device to display the plurality of partial replies to allow either of the first user device and the second user device to select a partial reply from the plurality to respond to a message from the automated assistant within the computer-implemented messaging session.

13. A non-transitory computer readable medium having stored therein instructions, that when executed by a computing system, cause the computing system to perform functions comprising:
identifying a query in a message between a first user device and a second user device within a computer-implemented messaging session;
receiving one or more context signals;
retrieving a plurality of automated assistants from a handler index that comprises at least one respective piece of functionality providable by each of the plurality of automated assistants;
selecting, based on the query, the pieces of functionality, and the one or more context signals, an automated assistant from the plurality of automated assistants to handle the query;
providing for display of an intervention request to allow the selected automated assistant to intervene in the computer-implemented messaging session;
receiving authorization to allow the selected automated assistant to intervene in the computer-implemented messaging session; and
in response to receiving the authorization, providing the query and the one or more context signals to the selected automated assistant to allow the selected automated assistant to respond to the query within the computer-implemented messaging session.

14. A system comprising:
at least one processor (503); and
a non-transitory computer readable medium (504) having stored therein instructions (506), that when executed by the at least one processor, cause the at least one processor to perform functions comprising:
identifying a query in a message between a first user device and a second user device within a computer-implemented messaging session;
receiving one or more context signals;
retrieving a plurality of automated assistants from a handler index that comprises at least one respective piece of functionality providable by each of the plurality of automated assistants;
selecting, based on the query, the pieces of functionality, and the one or more context signals, an automated assistant from the plurality of automated assistants to handle the query;
providing for display of an intervention request to allow the selected automated assistant to intervene in the computer-implemented messaging session;
receiving authorization to allow the selected automated assistant to intervene in the computer-implemented messaging session; and
in response to receiving the authorization, providing the query and the one or more context signals to the selected automated assistant to allow the selected automated assistant to respond to the query within the computer-implemented messaging session.

## Patentansprüche

1. Verfahren (200), umfassend:
Identifizieren (210) einer Abfrage in einer Nachricht zwischen einer ersten Benutzervorrichtung und einer zweiten Benutzervorrichtung innerhalb einer computerimplementierten Nachrichtensitzung;
Empfangen (220) eines oder mehrerer Kontextsignale;
Abrufen einer Vielzahl von automatisierten Assistenten aus einem Handler-Index, der mindestens einen jeweiligen Funktionalitätsteil umfasst, der durch jeden der Vielzahl von automatisierten Assistenten bereitgestellt werden kann;
Auswählen (230) eines automatisierten Assistenten aus der Vielzahl von automatisierten Assistenten, um die Abfrage zu bearbeiten, basierend auf der Abfrage, den Funktionalitätsteilen und dem einen oder den mehreren Kontextsignalen;
Bereitstellen (240) zum Anzeigen einer Eingriffsanforderung, um es dem ausgewählten automatisierten Assistenten zu erlauben, in die computerimplementierte Nachrichtensitzung einzugreifen;
Empfangen von Autorisierung, um es dem ausgewählten automatisierten Assistenten zu erlauben, in die computerimplementierte Nachrichtensitzung einzugreifen; und
als Reaktion auf das Empfangen der Autorisierung, Bereitstellen der Abfrage und des einen oder der mehreren Kontextsignale an den ausgewählten automatisierten Assistenten, um es dem ausgewählten automatisierten Assistenten zu erlauben, auf die Abfrage innerhalb der computerimplementierten Nachrichtensitzung zu antworten.

2. Verfahren nach Anspruch 1,
wobei das Identifizieren der Abfrage in der Nachricht zwischen der ersten Benutzervorrichtung und der zweiten Benutzervorrichtung das Identifizieren einer impliziten Abfrage in der Nachricht umfasst; und/oder
wobei mindestens eines der einen oder der mehreren Kontextsignale von einer der ersten Benutzervorrichtung und der zweiten Benutzervorrichtung empfangen wird.

3. Verfahren nach Anspruch 1 oder 2, ferner umfassend:
Bestimmen einer Rangfolge der Vielzahl von automatisierten Assistenten, basierend auf dem einen oder den mehreren Kontextsignalen; und
Auswählen des automatisierten Assistenten basierend auf Bewerten;
optional wobei die Rangfolge eine sitzungsspezifische Rangfolge umfasst.

4. Verfahren nach einem der Ansprüche 1-3,
wobei das eine oder die mehreren Kontextsignale Sensordaten von einem oder mehreren Sensoren auf jeder der ersten Benutzervorrichtung und der zweiten Benutzervorrichtung umfassen; und/oder
wobei das eine oder die mehreren Kontextsignale eines oder mehrere von einem Standort einer Benutzervorrichtung, einer Bewegungsgeschwindigkeit einer Benutzervorrichtung, einer Temperatur an einer Benutzervorrichtung, Umgebungsgeräuschen an einer Benutzervorrichtung, einem zukünftigen Kalendertermin einer Benutzervorrichtung und einer Anwendung, die auf einer Benutzervorrichtung läuft, umfassen.

5. Verfahren nach einem der Ansprüche 1-4,
wobei jeder der Vielzahl von automatisierten Assistenten eine entsprechende Benutzervorrichtungsanwendung aufweist und das Verfahren ferner Folgendes umfasst:
Bestimmen einer Anzahl von Benutzervorrichtungen in der computerimplementierten Nachrichtensitzung, auf denen die entsprechende Benutzervorrichtungsanwendung installiert ist, für jeden der Vielzahl von automatisierten Assistenten; und Auswählen des automatischen Assistenten basierend auf der bestimmten Anzahl von Benutzervorrichtungen für jeden automatischen Assistenten;
und/oder wobei jeder der Vielzahl von automatisierten Assistenten eine entsprechende Benutzervorrichtungsanwendung aufweist und das Verfahren ferner Folgendes umfasst:
Bestimmen einer Nutzungshäufigkeit der entsprechenden Benutzervorrichtungsanwendung durch jede Benutzervorrichtung in der computerimplementierten Nachrichtensitzung für jeden automatisierten Assistenten; und
Auswählen des automatisierten Assistenten basierend auf der bestimmten Nutzungsfrequenz für jeden automatisierten Assistenten.

6. Verfahren nach einem der Ansprüche 1-5, ferner umfassend:
Bestimmen eines relevanten Funktionalitätsteils aus dem Handler-Index, der von dem ausgewählten automatisierten Assistenten bereitgestellt werden kann, basierend auf der Abfrage, wobei die Eingriffsanforderung ferner eine Angabe des relevanten Funktionalitätsteils umfasst;
optional wobei das Verfahren ferner Folgendes umfasst:
Bestimmen eines relevanten Kontextsignals aus dem einen oder den mehreren Kontextsignalen, wobei das relevante Kontextsignal mit dem relevanten Funktionalitätsteil in Beziehung steht, wobei die Eingriffsanforderung ferner eine Angabe des relevanten Kontextsignals umfasst.

7. Verfahren nach einem der Ansprüche 1-6, ferner umfassend:
nachdem der automatisierte Assistent der computerimplementierten Nachrichtensitzung beigetreten ist, Identifizieren einer zusätzlichen Abfrage in einer nachfolgenden Nachricht, die der computerimplementierten Nachrichtensitzung bereitgestellt wird; und
Bereitstellen der zusätzlichen Abfrage an den automatischen Assistenten;
und/oder wobei das Verfahren ferner Folgendes umfasst:
nachdem der automatisierte Assistent der computerimplementierten Nachrichtensitzung beigetreten ist, Bereitstellen von Anweisungen an eine Benutzervorrichtung in der computerimplementierten Nachrichtensitzung, um den automatisierten Assistenten zu einer auf der Benutzervorrichtung gespeicherten Kontaktliste hinzuzufügen;
Auswählen des automatischen Assistenten zum Bearbeiten einer anderen Abfrage, die aus einer anderen computerimplementierten Nachrichtensitzung identifiziert wurde, die die Benutzervorrichtung beinhaltet; und
Bereitstellen einer nachfolgenden Eingriffsanforderung an die Benutzervorrichtung, um es dem automatisierten Assistenten zu erlauben, verschiedenen computerimplementierten Nachrichtensitzung beizutreten, wobei die nachfolgende Eingriffsanforderung angibt, dass der automatisierte Assistent in der auf der Benutzervorrichtung gespeicherten Kontaktliste enthalten ist.

8. Verfahren nach einem der Ansprüche 1-7, wobei der automatisierte Assistent eine Komponente einer grafischen Benutzerschnittstelle umfasst und das Verfahren ferner Folgendes umfasst:
Bereitstellen zum Anzeigen der grafischen Benutzerschnittstellenkomponente innerhalb der computerimplementierten Nachrichtensitzung auf jeder der ersten Benutzervorrichtung und der zweiten Benutzervorrichtung.

9. Verfahren nach Anspruch 8, wobei die grafische Benutzerschnittstellenkomponente durch ein Cloud-basiertes Serversystem ausgeführt wird, das einen aktuellen Zustand der grafischen Benutzerschnittstelle an jede der ersten Benutzervorrichtung und der zweiten Benutzervorrichtung streamt;
optional wobei das Verfahren ferner Folgendes umfasst:
Empfangen einer Wechselwirkung mit der grafischen Benutzerschnittstellenkomponente von der ersten Benutzervorrichtung, die einen Zustand der grafischen Benutzerschnittstellenkomponente verändert; und
als Reaktion darauf, Bereitstellen von Anweisungen, um die zweite Benutzervorrichtung zu veranlassen, den Status der grafischen Benutzerschnittstellenkomponente zu verändern, die auf der zweiten Benutzervorrichtung angezeigt wird.

10. Verfahren nach Anspruch 9, ferner umfassend:
Empfangen einer Wechselwirkung mit der grafischen Benutzerschnittstellenkomponente von der ersten Benutzervorrichtung, die einen Zustand der grafischen Benutzerschnittstellenkomponente verändert; und
als Reaktion darauf, Bereitstellen von Anweisungen, um die zweite Benutzervorrichtung zu veranlassen, eine Angabe über den Zustand der grafischen Benutzerschnittstellenkomponente auf der ersten Benutzervorrichtung anzuzeigen;
optional wobei die Angabe des Zustands der grafischen Benutzerschnittstellenkomponente auf der ersten Benutzervorrichtung einen Zeitstempel eines Inhaltsstroms umfasst, auf den aktuell durch die erste Benutzervorrichtung zugegriffen wird.

11. Verfahren nach einem der Ansprüche 1-10, wobei das eine oder die mehreren Kontextsignale eine Nähe der Benutzervorrichtung zu einer entfernten interaktiven Rechenvorrichtung umfassen; optional wobei das Verfahren ferner das Bereitstellen einer Autorisierungsanforderung an die Benutzervorrichtung des zweiten Benutzers umfasst, um die Benutzervorrichtung des ersten Benutzers zur Interaktion mit der entfernten interaktiven Rechenvorrichtung zu autorisieren, wobei die ausgewählte automatisierte Assistenzfunktion die Benutzervorrichtung des ersten Benutzers zur Interaktion mit der entfernten interaktiven Rechenvorrichtung befähigt, nachdem die ausgewählte automatisierte Assistenzfunktion der computerimplementierten Nachrichtensitzung beigetreten ist.

12. Verfahren nach einem der Ansprüche 1-11, ferner umfassend:
nachdem der automatisierte Assistent der computerimplementierten Nachrichtensitzung beigetreten ist, Empfangen einer Vielzahl von Teilantworten von dem automatisierten Assistenten; und
Bereitstellen von Anweisungen für jede der Benutzervorrichtungen des ersten und des zweiten Benutzers, um die Vielzahl von Teilantworten anzuzeigen, um es entweder der Benutzervorrichtung des ersten Benutzers oder der Benutzervorrichtung des zweiten Benutzers zu erlauben, eine Teilantwort aus der Vielzahl auszuwählen, um auf eine Nachricht des automatisierten Assistenten innerhalb der computerimplementierten Nachrichtensitzung zu antworten.

13. Nichttransitorisches computerlesbares Medium, das darauf gespeicherte Anweisungen aufweist, die, wenn sie durch ein Rechensystem ausgeführt werden, das Rechensystem dazu veranlassen, Funktionen durchzuführen, umfassend:
Identifizieren einer Abfrage in einer Nachricht zwischen einer ersten Benutzervorrichtung und einer zweiten Benutzervorrichtung innerhalb einer computerimplementierten Nachrichtensitzung;
Empfangen eines oder mehrerer Kontextsignale;
Abrufen einer Vielzahl von automatisierten Assistenten aus einem Handler-Index, der mindestens einen jeweiligen Funktionalitätsteil umfasst, der durch jeden der Vielzahl von automatisierten Assistenten bereitgestellt werden kann;
Auswählen eines automatisierten Assistenten aus der Vielzahl von automatisierten Assistenten, um die Abfrage zu bearbeiten, basierend auf der Abfrage, den Funktionalitätsteilen und dem einen oder den mehreren Kontextsignalen;
Bereitstellen zum Anzeigen einer Eingriffsanforderung, um es dem ausgewählten automatisierten Assistenten zu erlauben, in die computerimplementierte Nachrichtensitzung einzugreifen;
Empfangen von Autorisierung, um es dem ausgewählten automatisierten Assistenten zu erlauben, in die computerimplementierte Nachrichtensitzung einzugreifen; und
als Reaktion auf das Empfangen der Autorisierung, Bereitstellen der Abfrage und des einen oder der mehreren Kontextsignale an den ausgewählten automatisierten Assistenten, um es dem ausgewählten automatisierten Assistenten zu erlauben, auf die Abfrage innerhalb der computerimplementierten Nachrichtensitzung zu antworten.

14. System, umfassend:
mindestens einen Prozessor (503); und
ein nichttransitorisches computerlesbares Medium (504), das darauf gespeicherte Anweisungen (506) aufweist, die, wenn sie durch den mindestens einen Prozessor ausgeführt werden, den mindestens einen Prozessor dazu veranlassen, Funktionen durchzuführen, umfassend:
Identifizieren einer Abfrage in einer Nachricht zwischen einer ersten Benutzervorrichtung und einer zweiten Benutzervorrichtung innerhalb einer computerimplementierten Nachrichtensitzung;
Empfangen eines oder mehrerer Kontextsignale;
Abrufen einer Vielzahl von automatisierten Assistenten aus einem Handler-Index, der mindestens einen jeweiligen Funktionalitätsteil umfasst, der durch jeden der Vielzahl von automatisierten Assistenten bereitgestellt werden kann;
Auswählen eines automatisierten Assistenten aus der Vielzahl von automatisierten Assistenten, um die Abfrage zu bearbeiten, basierend auf der Abfrage, den Funktionalitätsteilen und dem einen oder den mehreren Kontextsignalen;
Bereitstellen zum Anzeigen einer Eingriffsanforderung, um es dem ausgewählten automatisierten Assistenten zu erlauben, in die computerimplementierte Nachrichtensitzung einzugreifen;
Empfangen von Autorisierung, um es dem ausgewählten automatisierten Assistenten zu erlauben, in die computerimplementierte Nachrichtensitzung einzugreifen; und
als Reaktion auf das Empfangen der Autorisierung, Bereitstellen der Abfrage und des einen oder der mehreren Kontextsignale an den ausgewählten automatisierten Assistenten, um es dem ausgewählten automatisierten Assistenten zu erlauben, auf die Abfrage innerhalb der computerimplementierten Nachrichtensitzung zu antworten.

## Revendications

1. Procédé (200), comprenant :
l'identification (210) d'une requête dans un message entre un premier dispositif utilisateur et un second dispositif utilisateur au sein d'une session de messagerie mise en œuvre par ordinateur ;
la réception (220) d'un ou plusieurs signaux de contexte ;
la récupération d'une pluralité d'assistants automatisés à partir d'un index de gestionnaire qui comprend au moins un élément respectif de fonctionnalité pouvant être fourni par chacun de la pluralité d'assistants automatisés ;
la sélection (230), sur la base de la requête, d'éléments de fonctionnalité, et des un ou plusieurs signaux de contexte, d'un assistant automatisé parmi la pluralité d'assistants automatisés pour gérer la requête ;
la fourniture (240) de l'affichage d'une demande d'intervention pour permettre à l'assistant automatisé sélectionné d'intervenir dans la session de messagerie mise en œuvre par ordinateur ;
la réception de l'autorisation de permettre à l'assistant automatisé sélectionné d'intervenir dans la session de messagerie mise en œuvre par ordinateur ; et
en réponse à la réception de l'autorisation, la fourniture de la requête et des un ou plusieurs signaux de contexte à l'assistant automatisé sélectionné pour permettre à l'assistant automatisé sélectionné de répondre à la requête dans la session de messagerie mise en œuvre par ordinateur.

2. Procédé selon la revendication 1,
dans lequel l'identification de la requête dans le message entre le premier dispositif utilisateur et le second dispositif utilisateur comprend l'identification d'une requête implicite dans le message ; et/ou
dans lequel au moins l'un des un ou plusieurs signaux de contexte est reçu à partir de l'un du premier dispositif utilisateur et du second dispositif utilisateur.

3. Procédé selon la revendication 1 ou 2, comprenant également :
la détermination, sur la base des un ou plusieurs signaux de contexte, d'un classement de la pluralité d'assistants automatisés ; et
la sélection de l'assistant automatisé sur la base du classement ;
éventuellement dans lequel le classement comprend un classement spécifique à la session.

4. Procédé selon l'une quelconque des revendications 1 à 3, dans lequel les un ou plusieurs signaux de contexte comprennent des données de capteur provenant d'un ou plusieurs capteurs sur chacun des premier et second dispositifs utilisateur ; et/ou dans lequel les un ou plusieurs signaux de contexte comprennent un ou plusieurs éléments parmi un emplacement d'un dispositif utilisateur, une vitesse de déplacement d'un dispositif utilisateur, une température au niveau d'un dispositif utilisateur, un bruit ambiant au niveau d'un dispositif utilisateur, un futur rendez-vous de calendrier d'un dispositif utilisateur, et une application exécutée sur un dispositif utilisateur.

5. Procédé selon l'une quelconque des revendications 1 à 4, dans lequel chacun de la pluralité d'assistants automatisés possède une application de dispositif utilisateur correspondante, et le procédé comprend également :
la détermination, pour chacun de la pluralité d'assistants automatisés, d'un nombre de dispositifs utilisateurs dans la session de messagerie mise en œuvre par ordinateur sur lesquels l'application de dispositif utilisateur correspondante est installée ; et
la sélection de l'assistant automatisé sur la base du nombre déterminé d'appareils utilisateurs pour chaque assistant automatisé ;
et/ou dans lequel chacun de la pluralité d'assistants automatisés possède une application de dispositif utilisateur correspondante, et le procédé comprend également :
la détermination, pour chaque assistant automatisé, d'une fréquence d'utilisation de l'application de dispositif utilisateur correspondante par chaque dispositif utilisateur dans la session de messagerie mise en œuvre par ordinateur ; et
la sélection de l'assistant automatisé sur la base de la fréquence d'utilisation déterminée pour chaque assistant automatisé.

6. Procédé selon l'une quelconque des revendications 1 à 5, comprenant également :
la détermination, sur la base de la requête, d'un élément de fonctionnalité pertinent à partir de l'index de gestionnaire pouvant être fourni par l'assistant automatisé sélectionné, dans lequel la demande d'intervention comprend également une indication de l'élément de fonctionnalité pertinent ;
éventuellement dans lequel, le procédé comprend également :
la détermination d'un signal de contexte pertinent à partir des un ou plusieurs signaux de contexte, dans lequel le signal de contexte pertinent est lié à l'élément de fonctionnalité pertinent, dans lequel la demande d'intervention comprend également une indication du signal de contexte pertinent.

7. Procédé selon l'une quelconque des revendications 1 à 6, comprenant également :
après que l'assistant automatisé a rejoint la session de messagerie mise en œuvre par ordinateur, l'identification d'une requête supplémentaire dans un message ultérieur fourni à la session de messagerie mise en œuvre par ordinateur ; et
la fourniture de la requête supplémentaire à l'assistant automatisé ;
et/ou dans lequel le procédé comprend également :
après que l'assistant automatisé a rejoint la session de messagerie mise en œuvre par ordinateur, la fourniture des instructions à un dispositif utilisateur dans la session de messagerie mise en œuvre par ordinateur pour ajouter l'assistant automatisé à une liste de contacts stockée sur le dispositif utilisateur ;
la sélection de l'assistant automatisé pour gérer une requête différente identifiée à partir d'une session de messagerie mise en œuvre par ordinateur différente qui comporte le dispositif utilisateur ; et
la fourniture d'une demande d'intervention ultérieure au dispositif utilisateur pour permettre à l'assistant automatisé de rejoindre la session de messagerie mise en œuvre par ordinateur différente, dans lequel la demande d'intervention ultérieure indique que l'assistant automatisé est dans la liste de contacts stockée sur le dispositif utilisateur.

8. Procédé selon l'une quelconque des revendications 1 à 7, dans lequel l'assistant automatisé comporte un composant d'interface utilisateur graphique, et le procédé comprend également :
la fourniture de l'affichage du composant d'interface utilisateur graphique dans la session de messagerie mise en œuvre par ordinateur sur chacun des premier et second dispositifs utilisateur.

9. Procédé selon la revendication 8, dans lequel le composant d'interface utilisateur graphique est exécuté par un système de serveur basé sur le cloud qui diffuse un état actuel de l'interface utilisateur graphique à chacun des premier et second dispositifs utilisateur ;
éventuellement dans lequel, le procédé comprend également :
la réception d'une interaction avec le composant d'interface utilisateur graphique à partir du premier dispositif utilisateur qui modifie un état du composant d'interface utilisateur graphique ; et
la fourniture de manière réactive des instructions pour amener le second dispositif utilisateur à modifier l'état du composant d'interface utilisateur graphique affiché sur le second dispositif utilisateur.

10. Procédé selon la revendication 9, comprenant également :
la réception d'une interaction avec le composant d'interface utilisateur graphique à partir du premier dispositif utilisateur qui modifie un état du composant d'interface utilisateur graphique ; et
la fourniture de manière réactive des instructions pour amener le second dispositif utilisateur à afficher une indication de l'état du composant d'interface utilisateur graphique sur le premier dispositif utilisateur ;
éventuellement dans lequel l'indication de l'état du composant d'interface utilisateur graphique sur le premier dispositif utilisateur comprend un horodatage d'un flux de contenu actuellement consulté par le premier dispositif utilisateur.

11. Procédé selon l'une quelconque des revendications 1 à 10, dans lequel les un ou plusieurs signaux de contexte comprennent une proximité du premier dispositif utilisateur par rapport à un dispositif informatique interactif distant ;
éventuellement dans lequel le procédé comprend également la fourniture d'une demande d'autorisation au second dispositif utilisateur pour autoriser le premier dispositif utilisateur à interagir avec le dispositif informatique interactif distant, dans lequel l'assistant automatisé sélectionné permet au premier dispositif utilisateur d'interagir avec le dispositif informatique interactif distant après que l'assistant automatisé sélectionné a rejoint la session de messagerie mise en œuvre par ordinateur.

12. Procédé selon l'une quelconque des revendications 1 à 11, comprenant également :
après que l'assistant automatisé a rejoint la session de messagerie mise en œuvre par ordinateur, la réception à partir de l'assistant automatisé d'une pluralité de réponses partielles ; et
la fourniture des instructions à chacun des premier et second dispositifs utilisateur pour afficher la pluralité de réponses partielles afin de permettre à l'un ou l'autre des premier et second dispositifs utilisateur de sélectionner une réponse partielle parmi la pluralité pour répondre à un message provenant de l'assistant automatisé dans la session de messagerie mise en œuvre par ordinateur.

13. Support non transitoire lisible par ordinateur contenant des instructions stockées dans celui-ci, qui, lorsqu'elles sont exécutées par un système informatique, amènent le système informatique à réaliser des fonctions comprenant :
l'identification d'une requête dans un message entre un premier dispositif utilisateur et un second dispositif utilisateur au sein d'une session de messagerie mise en œuvre par ordinateur ;
la réception d'un ou plusieurs signaux de contexte ;
la récupération d'une pluralité d'assistants automatisés à partir d'un index de gestionnaire qui comprend au moins un élément respectif de fonctionnalité pouvant être fourni par chacun de la pluralité d'assistants automatisés ;
la sélection, sur la base de la requête, d'éléments de fonctionnalité, et des un ou plusieurs signaux de contexte, d'un assistant automatisé parmi la pluralité d'assistants automatisés pour gérer la requête ;
la fourniture de l'affichage d'une demande d'intervention pour permettre à l'assistant automatisé sélectionné d'intervenir dans la session de messagerie mise en œuvre par ordinateur ;
la réception de l'autorisation de permettre à l'assistant automatisé sélectionné d'intervenir dans la session de messagerie mise en œuvre par ordinateur ; et
en réponse à la réception de l'autorisation, la fourniture de la requête et des un ou plusieurs signaux de contexte à l'assistant automatisé sélectionné pour permettre à l'assistant automatisé sélectionné de répondre à la requête dans la session de messagerie mise en œuvre par ordinateur.

14. Système comprenant :
au moins un processeur (503) ; et
un support de stockage non transitoire lisible par ordinateur (504) comprenant des instructions (506), qui, lorsqu'elles sont exécutées par l'au moins un processeur, amènent l'au moins un processeur à effectuer des opérations comprenant :
l'identification d'une requête dans un message entre un premier dispositif utilisateur et un second dispositif utilisateur au sein d'une session de messagerie mise en œuvre par ordinateur ;
la réception d'un ou plusieurs signaux de contexte ;
la récupération d'une pluralité d'assistants automatisés à partir d'un index de gestionnaire qui comprend au moins un élément respectif de fonctionnalité pouvant être fourni par chacun de la pluralité d'assistants automatisés ;
la sélection, sur la base de la requête, d'éléments de fonctionnalité, et des un ou plusieurs signaux de contexte, d'un assistant automatisé parmi la pluralité d'assistants automatisés pour gérer la requête ;
la fourniture de l'affichage d'une demande d'intervention pour permettre à l'assistant automatisé sélectionné d'intervenir dans la session de messagerie mise en œuvre par ordinateur ;
la réception de l'autorisation de permettre à l'assistant automatisé sélectionné d'intervenir dans la session de messagerie mise en œuvre par ordinateur ; et
en réponse à la réception de l'autorisation, la fourniture de la requête et des un ou plusieurs signaux de contexte à l'assistant automatisé sélectionné pour permettre à l'assistant automatisé sélectionné de répondre à la requête dans la session de messagerie mise en œuvre par ordinateur.
